(19) Europäisches Patentamt
European Patent Office
Office européen des brevets

(11) **EP 3 361 438 A1**

(12) **EUROPEAN PATENT APPLICATION**

(43) Date of publication:
**15.08.2018 Bulletin 2018/33**

(51) Int Cl.:
**G06Q 30/00** (2012.01)  **G06F 9/46** (2006.01)

(21) Application number: **18159611.5**

(22) Date of filing: **19.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **19.03.2007 US 89572907 P**

(62) Document number(s) of the earlier application(s) in accordance with Art. 76 EPC:
**08732503.1 / 2 126 696**

(71) Applicant: **Marketshare Partners Llc**
**Santa Monica, CA 90025-0419 (US)**

(72) Inventors:
• **CAVANDER, David**
 **Santa Monica, CA 90025-0419 (US)**

• **NICHOLS, Wes**
 **Santa Monica, CA 90025-0419 (US)**
• **VEIN, John**
 **Santa Monica, CA 90025-0419 (US)**
• **HANSSENS, Dominique**
 **Santa Monica, CA 90025-0419 (US)**

(74) Representative: **Samson & Partner Patentanwälte mbB**
 **Widenmayerstraße 6**
 **80538 München (DE)**

Remarks:
This application was filed on 01-03-2018 as a divisional application to the application mentioned under INID code 62.

(54) **AUTOMATICALLY PRESCRIBING TOTAL BUDGET FOR MARKETING AND SALES RESOURCES AND ALLOCATION ACROSS SPENDING CATEGORIES**

(57) A facility for automatically prescribing, for a distinguished offering, an allocation of resources to a total marketing budget and/or individual marketing activities is described.

| Determine reach and frequency factors for min persuasion and minimum impressions by type | Purchased Reach | Type | Effective % of target (reach) | FREQ WTS cf to C1112 | Frequency per Cust. Minimum No. Exposures/ Impressions per Purchase Cycle | No. Purchase cycles per year | Total Annual calc total no. impressions | CPI Ballpark 2007 Cost per impression $$ per | Total Est. Min Spending by Type |
|---|---|---|---|---|---|---|---|---|---|
| TARGET REACH SIZE OF TARGET AUDIENCE 5000000 | 6,260,000 | TV | 80 | 0.516 | 1.6 | 26 | 260,000,000 | 0.03 | $7,800,000 |
| | | Print - magazines | | 0.032 | 0.1 | 26 | 16,250,000 | 0.01 | $162,500 |
| | | Print – newspapers | | 0.032 | 0.1 | 26 | 16,250,000 | 0.005 | $81,250 |
| | | Radio | | 0.032 | 0.1 | 26 | 16,250,000 | 0.0025 | $40,625 |
| | | Outdoor | | 0.032 | 0.1 | 26 | 16,250,000 | 0.01 | $162,500 |
| | | Internet – search | | 0.065 | 0.2 | 26 | 32,500,000 | 0.01 | $325,000 |
| | | Internet – ad words | | 0.161 | 0.5 | 26 | 81,250,000 | 0.01 | $812,500 |
| | | Direct marketing | | 0.032 | 0.1 | 26 | 16,250,000 | 0.03 | $487,500 |
| | | Sponsorships/events | | 0.032 | 0.1 | 26 | 16,250,000 | 0.001 | $16,250 |
| | | PR/other | | 0.032 | 0.1 | 26 | 16,250,000 | 0.005 | $81,250 |
| | | Street | | 0.032 | 0.1 | 26 | 16,250,000 | 0.01 | $162,500 |
| | | | | WTD sum | 3.1 | | 503,750,000 | Sub-total | $10,131,875 |

*FIG. 17*

1700

EP 3 361 438 A1

**Description**

CROSS-REFERENCE TO RELATED APPLICATIONS)

The present application claims priority to U.S. Provisional Patent Application No. 60/895,729, filed March 19, 2007, and which is incorporated herein by reference in its entirety.

TECHNICAL FIELD

The described technology is directed to the field of automated decision support tools, and, more particularly, to the field of automated budgeting tools.

BACKGROUND

Marketing communication ("marketing") is the process by which the sellers of a product or a service-i.e., an "offering"-educate potential purchasers about the offering. Marketing is often a major expense for sellers, and is often made of a large number of components or categories, such as a variety of different advertising media and/or outlets, as well as other marketing techniques. Despite the complexity involved in developing a marketing budget attributing a level of spending to each of a number of components, few useful automated decision support tools exists, making it common to perform this activity manually, relying on subjective conclusions, and in many cases producing disadvantageous results.
In the few cases where useful decision support tools exist, it is typically necessary for the tool's user to provide large quantities of data about past allocations of marketing resources to the subject offering, and the results that that they produced.

BRIEF DESCRIPTION OF THE DRAWINGS

Figure 1 is a high-level data flow diagram showing data flow within a typical arrangement of components used to provide the facility.

Figure 2 is a block diagram showing some of the components typically incorporated in at least some of the computer systems and other devices on which the facility executes.

Figure 3 is a table drawing showing sample contents of a library of historical marketing efforts.

Figure 4 is a display diagram showing a sign-in page used by the facility to limit access to the facility to authorized users.

Figure 5 is a flow diagram showing a page display generated by the facility in a view/edit mode.

Figures 6-9 show displays presented by the facility in order to solicit information about the subject offering for which an overall marketing budget and its distribution are to be prescribed by the facility.

Figure 10 is a display diagram showing a result navigation display presented by the facility after collecting information about the subject offering to permit the user to select a form of analysis for reviewing results.

Figure 11 is a display diagram showing a display presented by the facility to convey the optimal total marketing budget that the facility has is determined for the subject offering.

Figure 12 is a display presented by the facility to show spending mix information. The display includes an overall budget prescribed by the facility.

Figure 13 is a process diagram that describes collecting additional offering attribute information from the user.

Figure 14 is a process diagram showing the derivation of three derived measures for the subject offering: cognition, affect, and experience.

Figure 15 is a table diagram showing sets of marketing activity allocations, each for a different combination of the three derived attributes shown in Figure 14.

Figure 16 is a process diagram showing how the initial allocation specified by the table in Figure 15 should be adjusted for a number of special conditions.

Figure 17 is a process diagram showing how the facility determines dollar amount for spending on each marketing activity.

Figure 18 is a process diagram showing the final adjustment to the results shown in Figure 17.

Figure 19 is a display diagram showing a display presented by the facility to portray resource allocation prescriptions made by the facility with respect to a number of related subject offerings, such as the same product packaged in three different forms.

DETAILED DESCRIPTION

The inventors have recognized that, in many cases, such as in the case of a new offering, the large quantities of data about past allocations of marketing resources to the subject offering and the results that that they produced that a user would have to provide to a conventional decision support tool is not available. The inventors have further recognized that, even where such data is available, it can be inconvenient to access this data and provide it to the decision support tool.

Accordingly, a tool that automatically prescribed an advantageous allocation of funds or other resources to an offering and its various components without requiring the user to provide historical performance data for the offering would have significant utility.

A software facility that uses a qualitative description of a subject offering to automatically prescribe both (1) a total budget for marketing and sales resources for a subject offering and (2) an allocation of that total budget over multiple spending categories -- also referred to as "activities" -- in a manner intended to optimize a business outcome such as profit for the subject offering based on experimentally-obtained econometric data ("the facility") is provided.

In an initialization phase, the facility considers data about historical marketing efforts for various offerings that have no necessary relationship to the marketing effort for the subject offering. The data reflects, for each such effort: (1) characteristics of the marketed offering; (2) total marketing budget; (3) allocation among marketing activities; and (4) business results. This data can be obtained in a variety of ways, such as by directly conducting marketing studies, harvesting from academic publications, etc.

The facility uses this data to create resources adapted to the facility's objectives. First, the facility calculates an average elasticity measure for total marketing budget across all of the historical marketing efforts that predicts the impact on business outcome of allocating a particular level of resources to total marketing budget. Second, the facility derives a number of adjustment factors for the average elasticity measure for total marketing budget that specify how much the average elasticity measure for total marketing budget is to be increased or decreased to reflect particular characteristics of the historical marketing efforts. Third, for the historical marketing efforts of each of a number groups of qualitatively similar offerings, the facility derives per-activity elasticity measures indicating the extent to which each marketing activity impacted business outcome for marketing efforts for the group.

The facility uses interviewing techniques to solicit a qualitative description of the subject offering from user. The facility uses portions of the solicited qualitative description to identify adjustment factors to apply to the average elasticity measure for total marketing budget. The facility uses a version of average elasticity measure for total marketing budget adjusted by the identified adjustment factors to identify an ideal total marketing budget expected to produce the highest level of profit for the subject offering, or to maximize some other objective specified by the user.

After identifying the ideal total marketing budget, the facility uses the solicited qualitative description of the subject offering to determine which of the groups of other offerings the subject offering most closely matches, and derives a set of ideal marketing activity allocations from the set of per-activity elasticity measures derived for that group.

In this manner, the facility automatically prescribes a total marketing resource allocation and distribution for the subject offering without requiring the user to provide historical performance data for the subject offering.

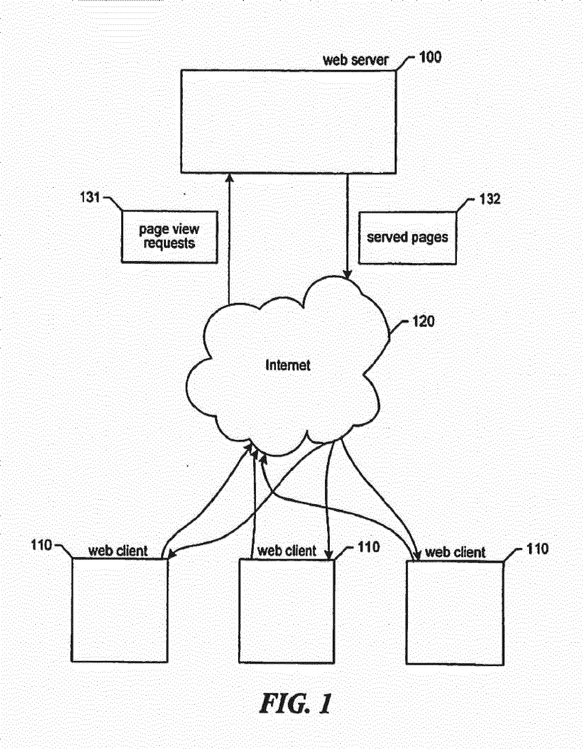

Figure 1 is a high-level data flow diagram showing data flow within a typical arrangement of components used to provide the facility. A number of web client computer systems 110 that are under user control generate and send page view requests 131 to a logical web server 100 via a network such as the Internet 120. These requests typically include page view requests and other requests of various types relating to receiving information about a subject offering and providing information about prescribed total marketing budget and its distribution. Within the web server, these requests may either all be routed to a single web server computer system, or may be loaded-balanced among a number of web server computer systems. The web server typically replies to each with a served page 132.

While various embodiments are described in terms of the environment described above, those skilled in the art will appreciate that the facility may be implemented in a variety of other environments including a single, monolithic computer system, as well as various other combinations of computer systems or similar devices connected in various ways. In various embodiments, a variety of computing systems or other different client devices may be used in place of the web client computer systems, such as mobile phones, personal digital assistants, televisions, cameras, etc.

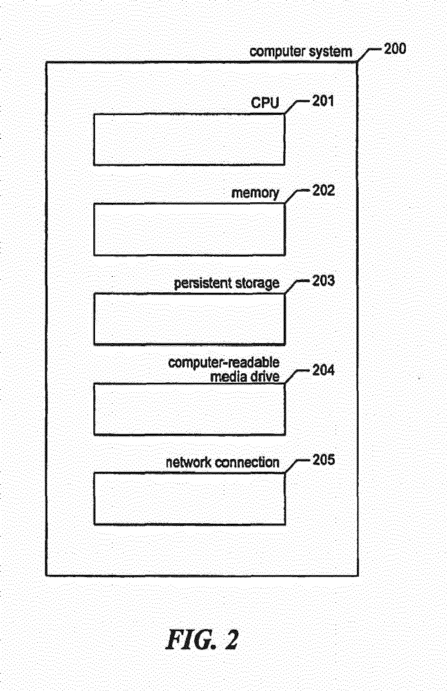

Figure 2 is a block diagram showing some of the components typically incorporated in at least some of the computer systems and other devices on which the facility executes. These computer systems and devices 200 may include one or more central processing units ("CPUs") 201 for executing computer programs; a computer memory 202 for storing programs and data while they are being used; a persistent storage device 203, such as a hard drive for persistently storing programs and data; a computer-readable media drive 204, such as a CD-ROM drive, for reading programs and data stored on a computer-readable medium; and a network connection 205 for connecting the computer system to other computer systems, such as via the internet. While computer systems configured as described above are typically used to support the operation of the facility, those skilled in the art will appreciate that the facility may be implemented using devices of various types and configurations, and having various components.

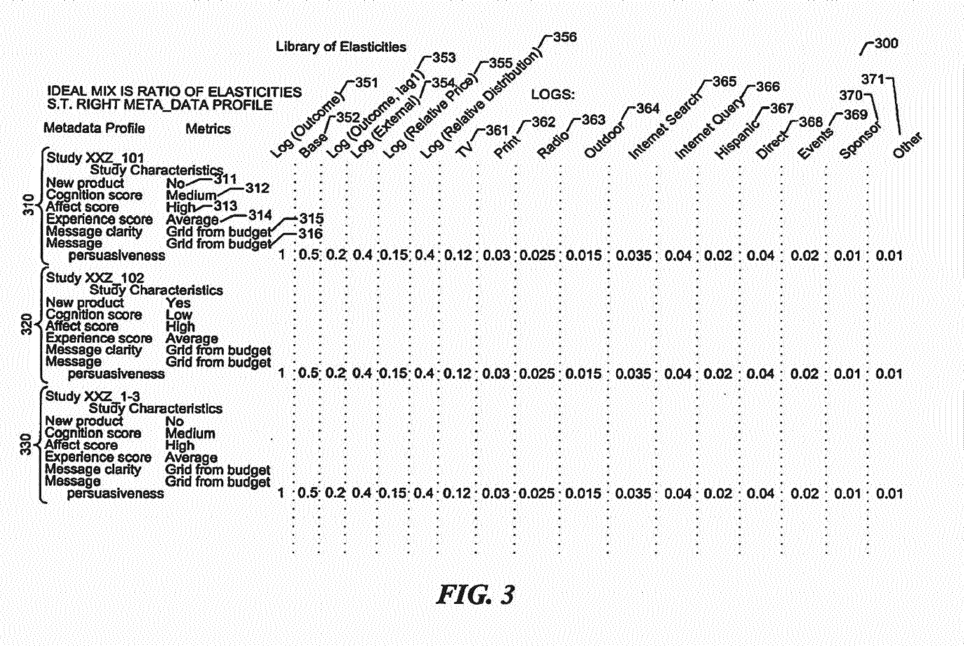

Figure 3 is a table drawing showing sample contents of a library of historical marketing efforts. The library 300 is made up of entries, such as entries 310, 320, and 330, each corresponding to a set of one or more historical marketing efforts each sharing a similar context. Each entry contains a number of context attribute values that hold true for the historical marketing efforts corresponding to the entry, including values for a new product attribute 311, a cognition score attribute 312, an affect score attribute 313, an experience score 314, a message clarity score 315, and a message persuasiveness score 316. Each entry further contains values for the following statistical measures for the historical marketing efforts corresponding to the entry: log of the outcome 351, base 352, log of outcome with a lag factor 353, log of external 354, log of relative price 355, and log of relative distribution 356. Each entry further contains logs of advertising efficiency values for each of a number of categories, including TV 361, print 362, radio 363, outdoor 364, Internet search 365, Internet query 366, Hispanic 367, direct 368, events 369, sponsorship 370, and other 371.

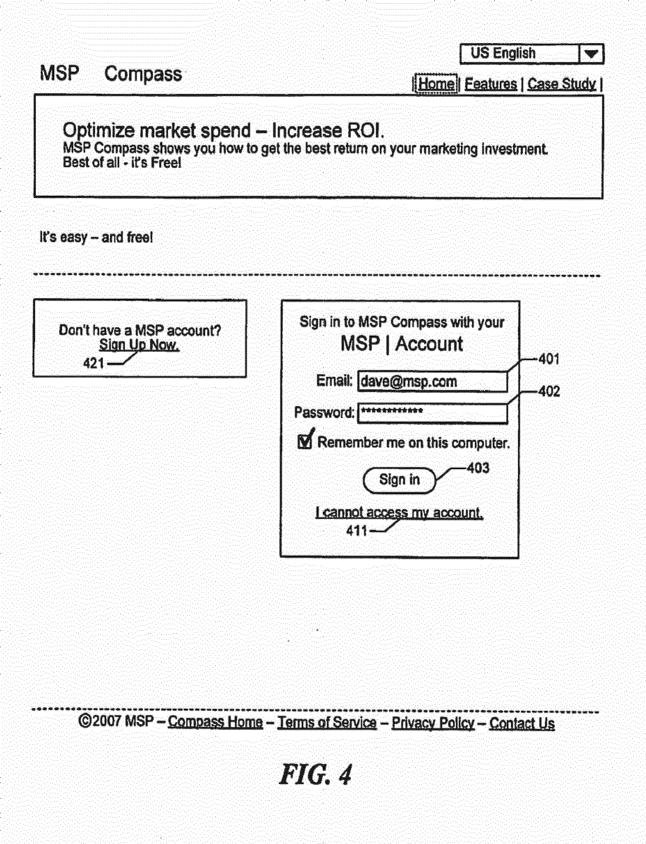

Figure 4 is a display diagram showing a sign-in page used by the facility to limit access to the facility to authorized users. A user enters his or her email address into field 401, his or her password into field 402, and selects a signing control 403. If the user has trouble signing in in this manner, the user selects control 411. If the user does not yet have an account, the user selects control 421 in order to create a new account.

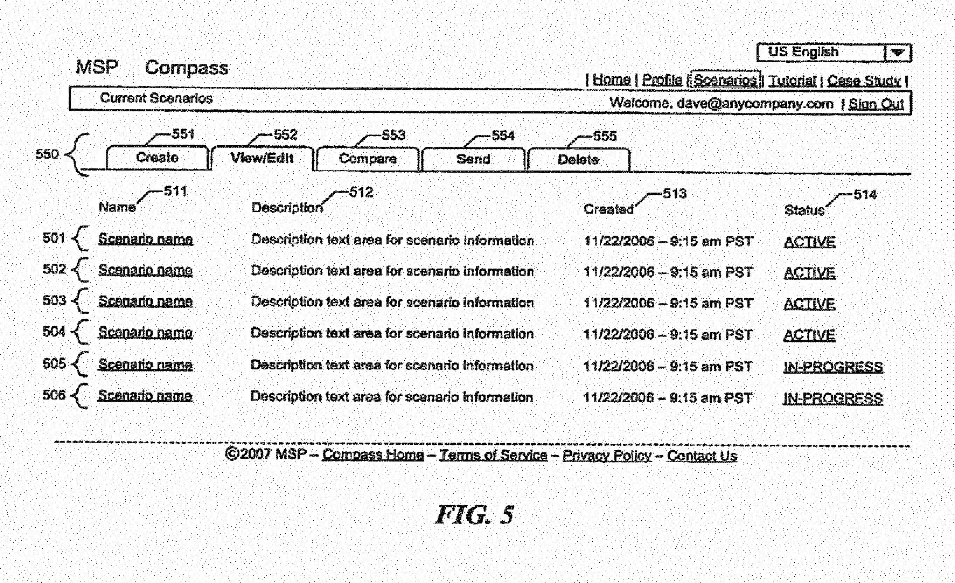

Figure 5 is a flow diagram showing a page display generated by the facility in a view/edit mode. The display lists a number of scenarios 501-506, each corresponding to an existing offering prescription generated for the user, or generated for an organization with which the user is associated. For each scenario, the display includes the name of the scenario 511, a description of the scenario 512, a date 513 on which the scenario was created, and a status of the scenario. The user may select any of the scenarios, such as by selecting its name, or its status, to obtain more information about the scenario. The display also includes a tab area 550 that the user may use in order to navigate different modes of the facility. In addition to tab 552 for the present view/edit mode, the tab area includes a tab 551 for a create mode, a tab 553 for a compare mode, a tab 554 for a send mode, and a tab 555 for a delete mode. The user can select any of these tabs in order to activate the corresponding mode.

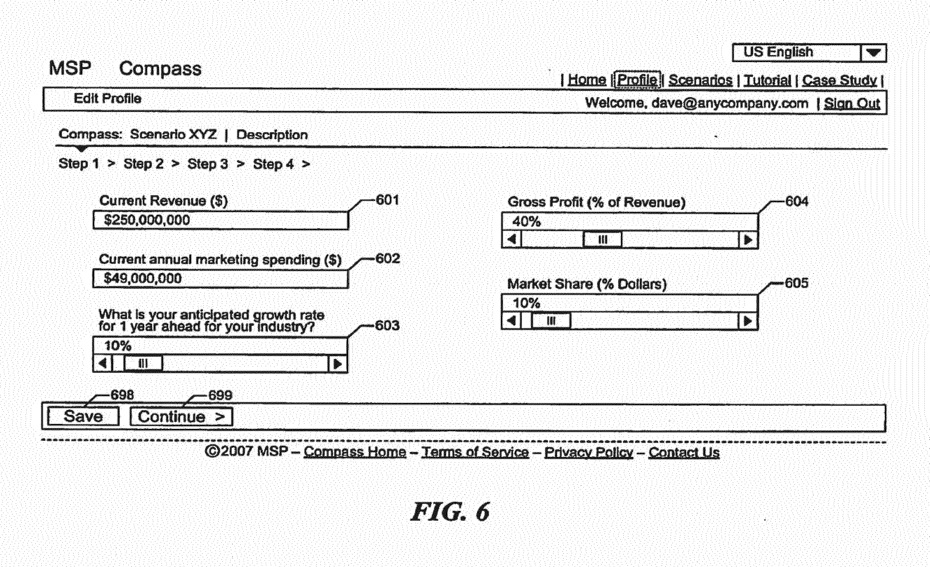

Figures 6-9 show displays presented by the facility in order to solicit information about the subject offering for which an overall marketing budget and its distribution are to be prescribed by the facility. Figure 6 shows controls for entering values for the following attributes: current revenue 601, current annual marketing spending 602, anticipated growth rate for the next year in the industry as a whole 603, gross profit expressed as a percentage of revenue 604, and market share expressed as a percentage of dollar 605. The display further includes a save control 698 that the user can select in order to save the attribute values that they have entered, and a continue control 699 that the user may select in order to proceed to the next display for entering the context attribute values.

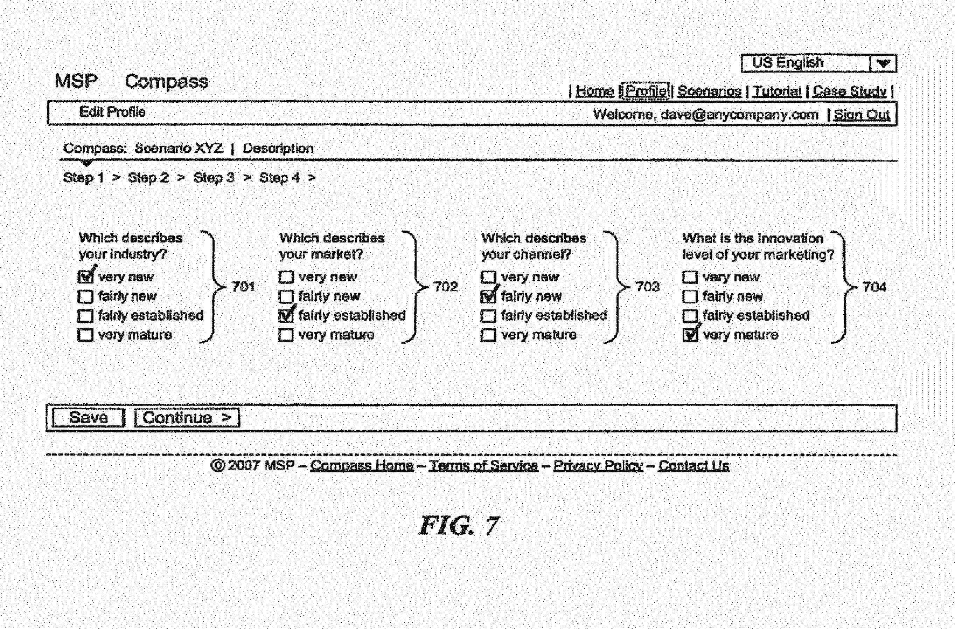

Figure 7 is a further display presented by the facility to solicit attribute values for the subject offering. It includes controls for inputting values for the following context attributes: industry newness 701, market newness 702, channel newness 703, and marketing innovation 704.

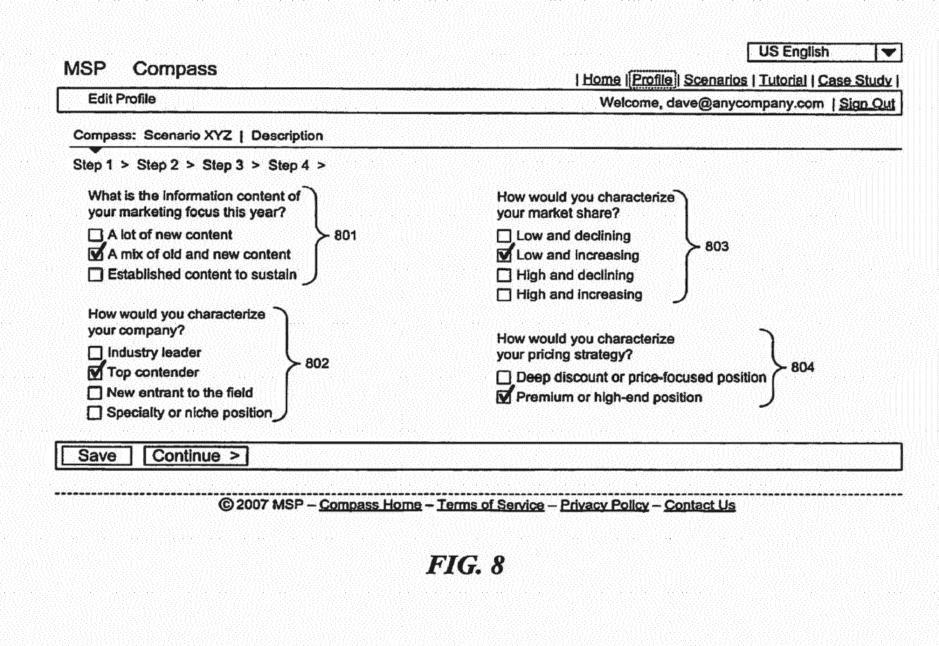

Figure 8 is a further display presented by the facility in order to solicit attribute values. It has controls that the user may use to enter the values for the following context attributes: newness of marketing information content 801, company position in the market 802, market share 803, and pricing strategy 804.

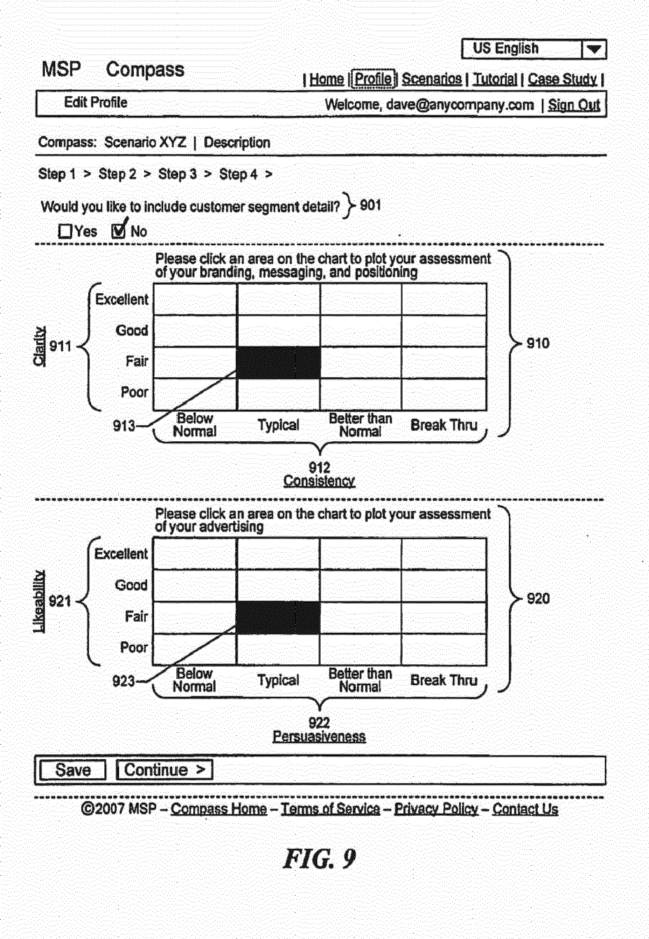

Figure 9 is a further display presented by the facility in order to solicit attribute values. It contains a control 901 that the user may use to determine whether customer segment detail will be included. The display further contains charts 910 and 920 for specifying values of additional context attributes. Chart 910 can be used by the user to simultaneously specify values for the consistency and clarity of branding messaging and positioning efforts by the company responsible for the subject offering. In order to use chart 910, the user selects a single cell in the grid included in the chart corresponding to appropriate values of both the consistency and clarity attributes. Section 920 is similar, enabling the user to simultaneously select appropriate values for the persuasiveness and likeability of the company's advertising,

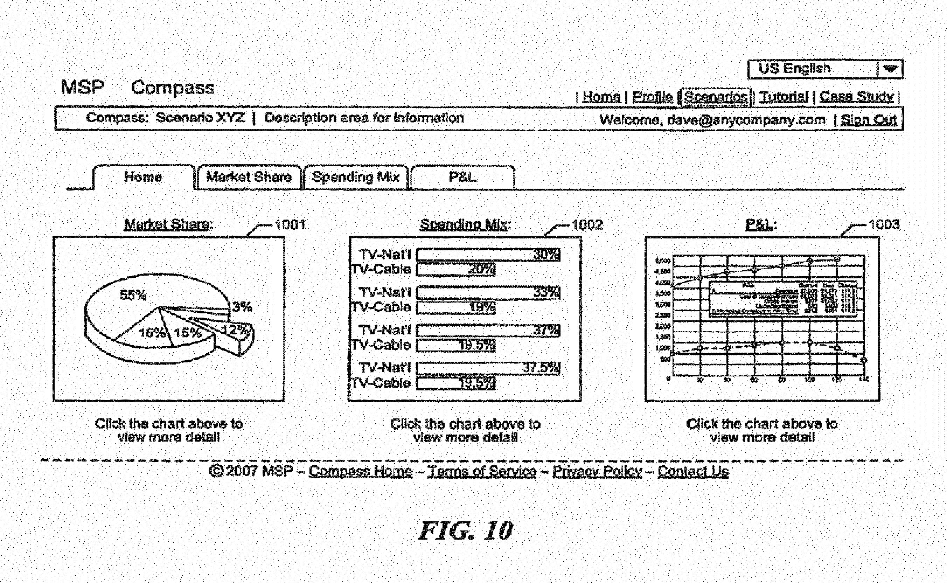

Figure 10 is a display diagram showing a result navigation display presented by the facility after collecting information about the subject offering to permit the user to select a form of analysis for reviewing results. The display includes a control 1001 that the user may select in order to review market share information relating to the result, a control 1002 that the user may select in order to review spending mix information relating to the result, and a control 1003 that the user may select in order to review profit and loss information relating to the result.

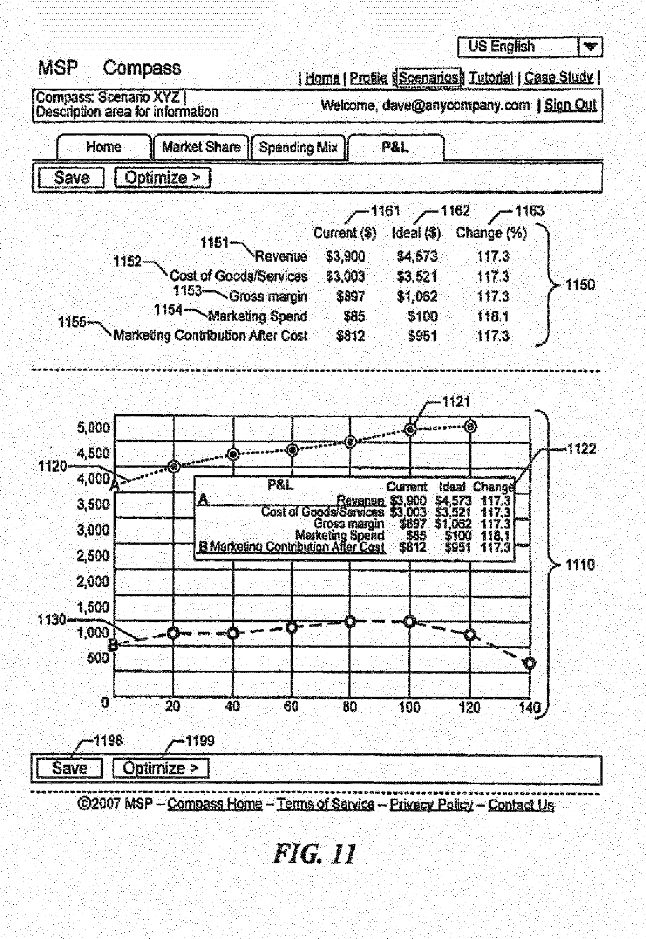

Figure 11 is a display diagram showing a display presented by the facility to convey the optimal total marketing budget that the facility has determined for the subject offering. The display includes a graph 1110 showing two curves: revenue with respect to total marketing budget (or "marketing spend") 1120 and profit (i.e., "marketing contribution after cost") with respect to total marketing budget 1130. The facility has identified point 1131 as the peak of the profit curve 1130 and has therefore identified the corresponding level of marketing spend, $100, as the optimal marketing spend. The height of point 1131 shows the expected level of profit that would be produced by this marketing spend, and the height of point 1121 shows the expected level of total revenue that would be expected at this marketing spend. Table 1150 provides additional information about the optimal marketing spend and its calculation. The table shows, for each of current marketing spend 1161, ideal marketing spend 1162, and delta between these two 1163: revenue 1151 projected for this level of marketing spend; costs of goods and services 1152 anticipated to be incurred at this level of marketing spend; gross margin 1153 to be procured at this level of marketing spend; the marketing spend 1154; and the marketing contribution after cost 1155 expected at this level of marketing spend.

In order to define the profit curve and identify the total marketing budget level at which it reaches its peak, the facility first determines a total marketing budget elasticity appropriate for the subject offering. This elasticity value falls in a range between .01 and .30, and is overridden to remain within this range. The facility calculates the elasticity by adjusting an initial elasticity value, such as .10 or .11, in accordance with a number of adjustment factors each tied to a particular attribute value for the subject offering. Sample values for these adjustment factors are shown below in Table 1.

Table 1

| | Industry Newness | Marketing Innovation | New Information | Market Share | Advertising Quality |
|---|---|---|---|---|---|
| High | .05 | .1 | .05 | -.03 | .04 |
| Medium | 0 | 0 | 0 | 0 | 0 |
| Low | -.02 | -.03 | -.02 | .02 | -.03 |

The industry newness column corresponds to control 701 shown in Figure 7. For example, if the top check box in control 701 is checked, then the facility selects the adjustment factor .05 from the industry newness column; if either of the middle two boxes in control 701 are checked, then the facility selects the adjustment factor 0 from the industry newness column; and if the bottom checkbox in control 701 is checked, then the facility selects the adjustment factor -.02 from the industry newness column. Similarly, the marketing innovation column corresponds to control 704 shown in Figure 7, the new information column corresponds to control 801 shown in Figure 8, and the market share column corresponds to control 803 shown in Figure 8. The advertising quality column corresponds to charts 910 and 920 shown in Figure 9. In particular, the sum of the positions of the cells selected in the two graphs relative to the lower left-hand corner of each graph is used to determine a high, medium, or low level of advertising quality.

The facility then uses the adjusted total marketing budget elasticity to determine the level of total marketing budget at which the maximum profit occurs, as is discussed in detail below in Table 2.

Table 2

| Definitions: |
| --- |
|     Sales = S<br>    Base = $\beta$<br>    Marketing Spend = M<br>    Elasticity = $\alpha$<br>    Cost of Goods Sold (COGS) = C<br>    Profit = P (P is a function of S, C, M, as defined in equation 2 below) |
| Fundamental equation relating Sales to Marketing (alpha and beta will be supplied):<br><br>$$\text{Equation (1):} \quad S = \beta * M^{\alpha}$$<br><br>Equation relating Sales to Profits (C will be known); the facility substitutes for Sales in equation (1) above and sets the program to maximize profits for a given alpha and beta: |

(continued)

$$\text{Equation (2):} \quad P = \left[ S * (1-C) - M \right]$$

Solve Equation (2) for Sales: $\dfrac{(P+M)}{(1-C)} = S$

Substitute for S in Fundamental Equation: $\dfrac{(P+M)}{(1-C)} = P * M^{\alpha}$

Solve for P as a function of M, C, alpha and beta to obtain P as a function of M: $P = \beta * M^{\alpha} * (1-C)] - M$

Take derivatives: $\dfrac{dP}{dM} = \left( \left[ (1-C)\beta\alpha \right] * M^{\alpha-1} \right) - 1$

Set to zero to give local inflection point: $1 = (1-C)\beta\alpha] * M^{\alpha-1}$

Solve for M: $M = \left( \dfrac{1}{\left[ (1-C)\beta\alpha \right]} \right)^{\frac{1}{\alpha-1}}$

Check sign of second derivative (to see that it is a max not a min):
$[(1-C)\beta\alpha(\alpha-1)] * M^{\alpha-2} < 0$ ?

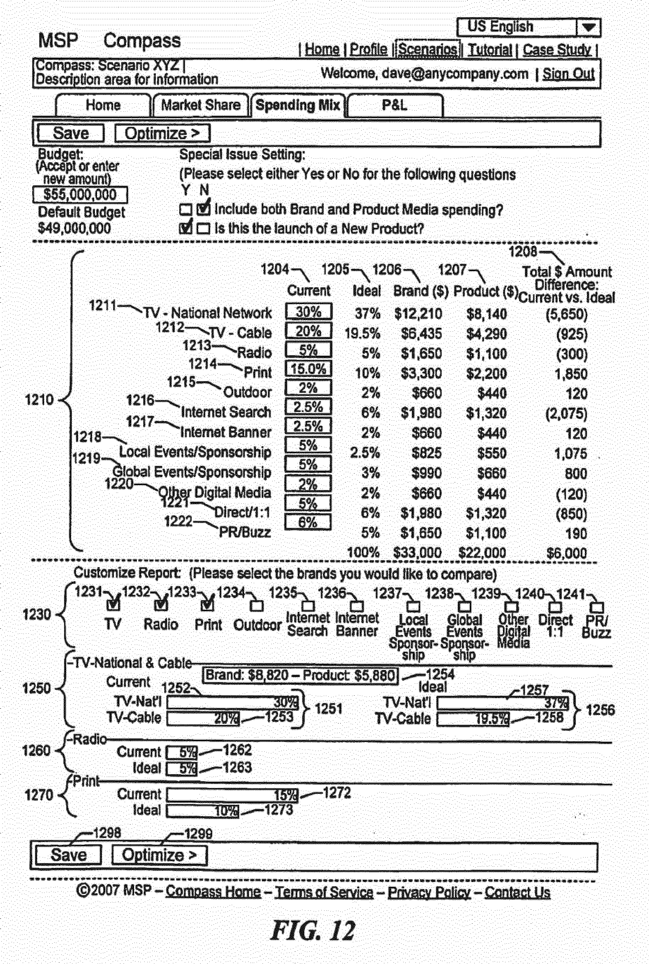

Figure 12 is a display presented by the facility to show spending mix information. The display includes an overall budget 1201 prescribed by the facility. The user may edit this budget if desired to see the effect on distribution information shown below. The display also includes controls 1202 and 1203 that the user may use to identify special issues relating to the prescription of the marketing budget. The display further includes a table 1210 showing various information for each of a number of marketing activities. Each row 1211-1222 identifies a different marketing activity. Each row is further divided into the following columns: current percentage allocation 1204, ideal percentage allocation 1205, dollar allocation to brand in thousands 1206, dollar allocation to product in thousands 1207, and dollar difference in thousands between current and ideal. For example, from row 1214, it can be seen that the facility is prescribing a reduction in allocation for print advertising from 15% to 10%, $3.3 million of which would be spent on print advertising for the brand and $2.2 million of which would be spent on print advertising for the product, and that the current allocation to print marketing is $1.85 million greater than the ideal allocation. The display further includes a section 1230 that the user may use to customize a bar chart report to include or exclude any of the budget and marketing activities. It can be seen that the user has selected check boxes 1231-1233, causing sections 1250, 1260, and 1270 to be added to the report containing bar graphs for the TV, radio, and print marketing activities. In section 1250 for the TV marketing activity contains bar 1252 for the current percentage allocation to national TV, bar 1253 for the current percentage allocation to cable TV, bar 1257 for the ideal percentage allocation to national TV, and bar 1258 for the ideal percentage allocation for cable TV. The other report sections are similar.

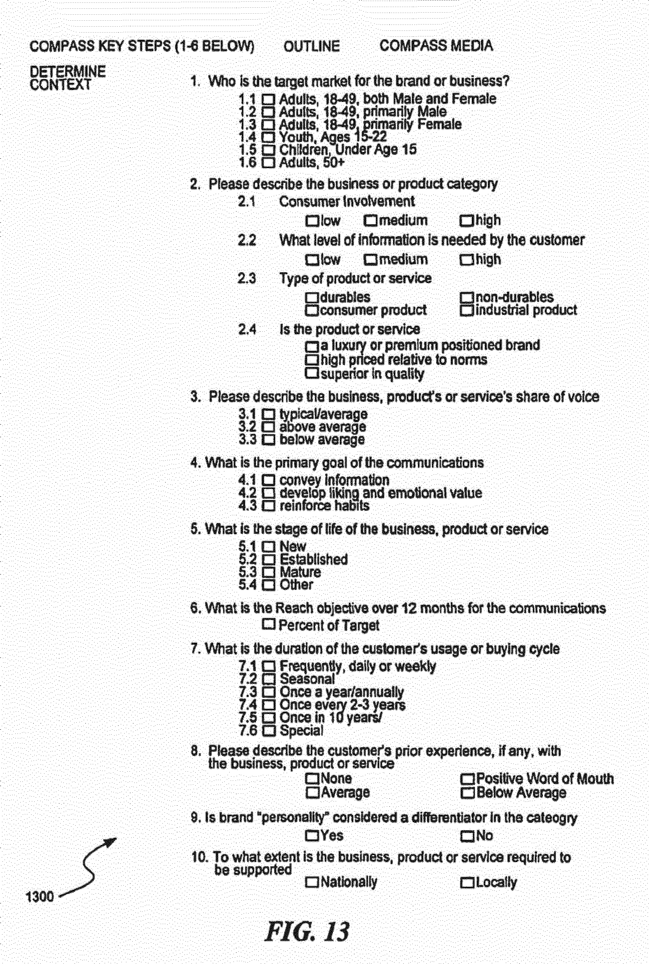

Figures 13-18 describe the process by which the facility determines the activity distribution shown in Figure 12. Figure 13 is a process diagram that describes collecting additional offering attribute information from the user. In some embodiments, this additional attribute information is obtained from the user using a user interface that is similar in design to that shown in Figures 6-9. Figure 13 shows a number of attributes 1300 for which values are solicited from the user for the subject offering.

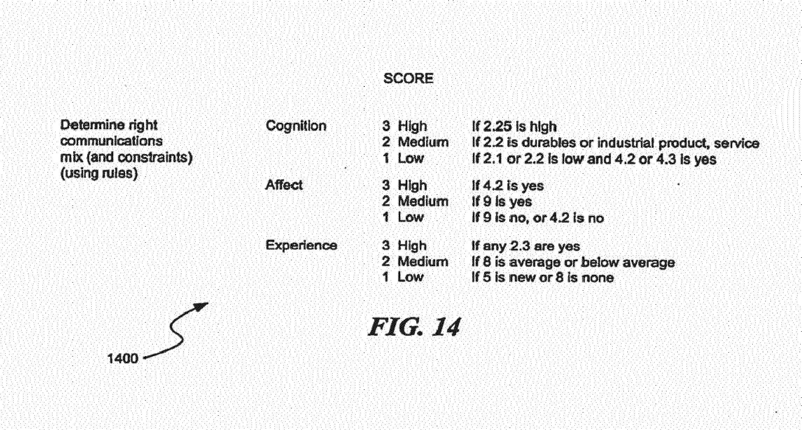

Figure 14 is a process diagram showing the derivation of three derived measures for the subject offering: cognition, affect, and experience. The values for these derived measures are derived based upon the value of attributes shown in Figure 13 provided by the user for the subject offering.

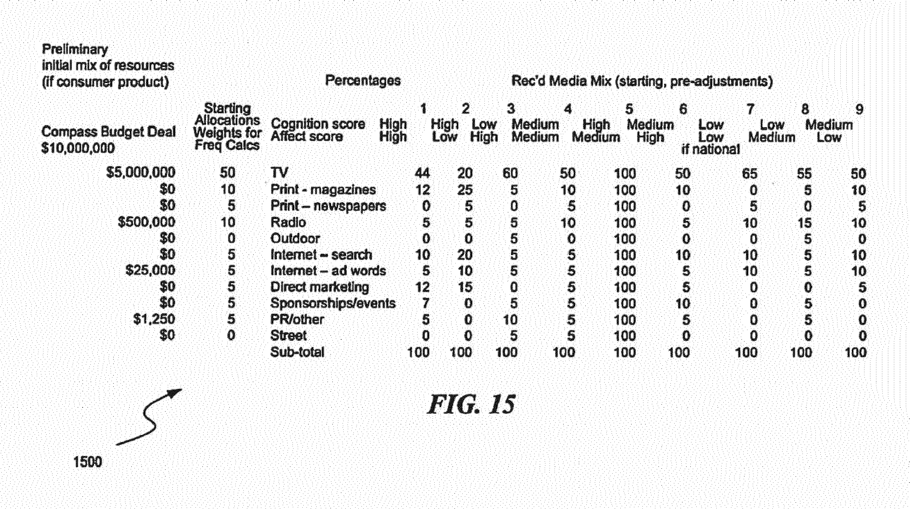

Figure 15 is a table diagram showing sets of marketing activity allocations, each for a different combination of the three derived attributes shown in Figure 14. For example, Figure 15 indicates that, for subject offerings assigned a high cognition score and medium affects score should be assigned marketing resources in the following percentages: TV 44%, print magazines 12%, print newspapers 0%, radio 5%, outdoor 0%, internet search 10%, internet ad words 5%, direct marketing 12%, sponsorships/events 7%, PR/other 5%, and street 0%. Each of these nine groups of allocations is based on the relative activity elasticities, like those shown in Figure 3, grouped by the cognition and affect scores indicated for the groups of historical marketing efforts contained in the library.

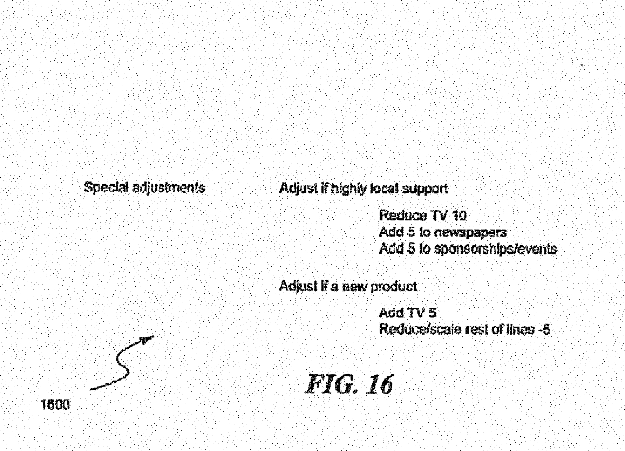

Figure 16 is a process diagram showing how the initial allocation specified by the table in Figure 15 should be adjusted for a number of special conditions 1600.

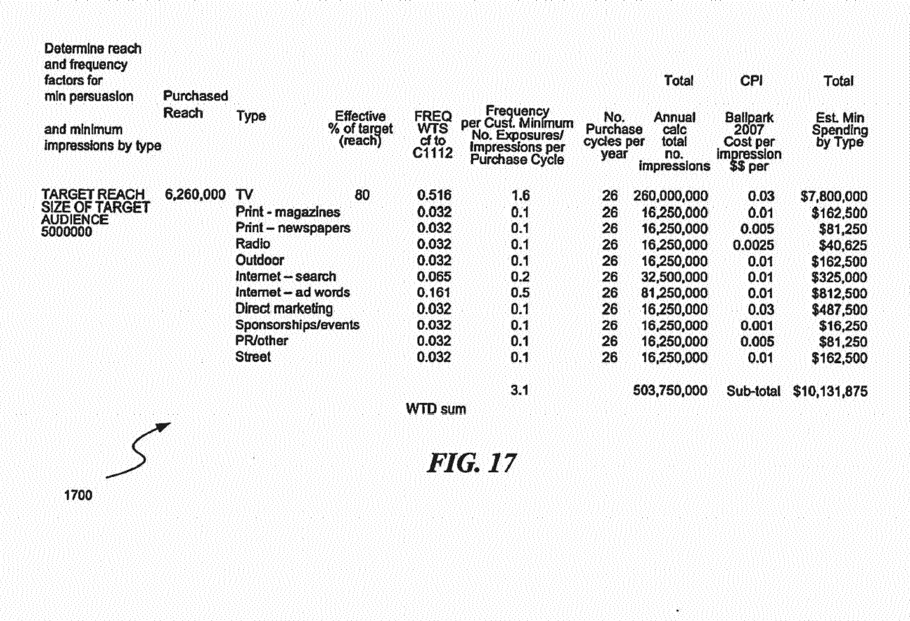

Figure 17 is a process diagram showing how the facility determines dollar amount for spending on each marketing activity. The process 1700 takes the size of target audience specified by the user and divides by affective percentage of target to obtain a purchased reach - that is, the number of users to whom marketing messages will be presented. This number is multiplied by the adjusted allocation percentage to obtain a frequency per customer which is then multiplied by a number of purchase cycles per year and cost per impression to obtain estimated spending for each activity.

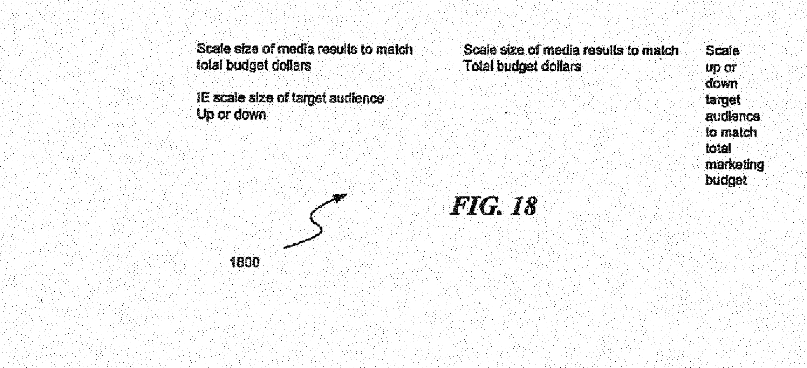

Figure 18 is a process diagram showing the final adjustment to the results shown in Figure 17. Process 1800 specifies scaling the target audience up or down to match the total marketing budget determined by the facility for the subject offering.

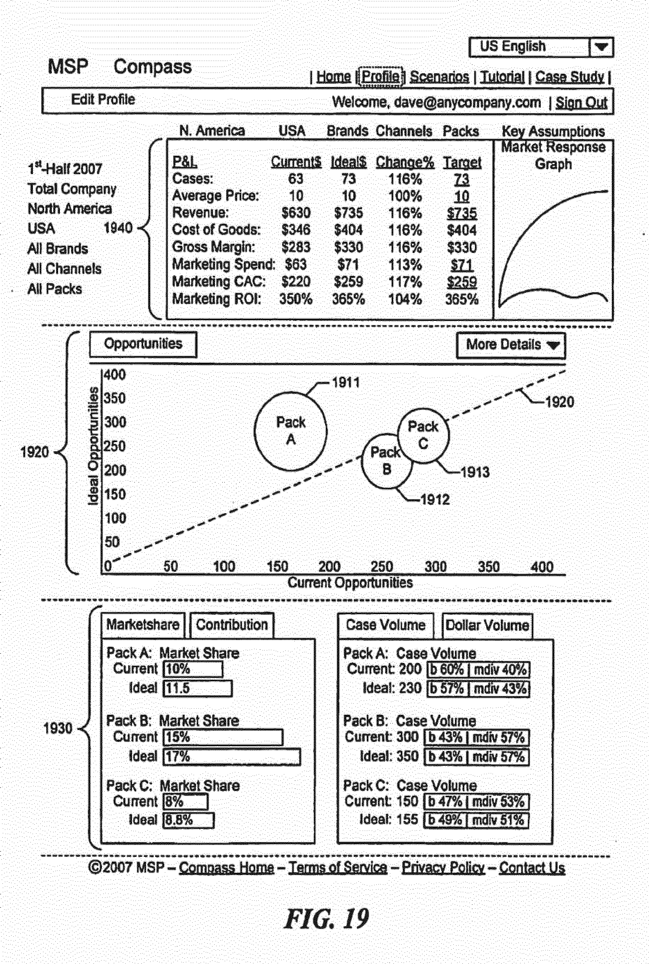

Figure 19 is a display diagram showing a display presented by the facility to portray resource allocation prescriptions made by the facility with respect to a number of related subject offerings, such as the same product packaged in three different forms. The display includes a chart 1910 that graphically depicts each of the related subject offerings, pack A, pack B, and pack C, each with a circle. The position of the center of the circle indicates the current and ideal total marketing budget allocated to the offering, such that each circle's distance and direction from a 45° line 1920 indicates whether marketing spending should be increased or decreased for the offering and by how much. For example, the fact that the circle 1911 for pack A is above and to the left of the 45° line indicates that marketing spending should be increased for pack A. Further, the diameter and/or area of each circle reflects the total profit attributable to the corresponding subject offering assuming that the ideal total marketing budget specified by the facility for that offering is adopted. The display also includes a section 1930 containing a bar graph showing market share and volume, both current and ideal, for each related subject offering. The display also includes a section 1940 showing information similar to that shown in Section 1150 of Figure 11.

It will be appreciated by those skilled in the art that the above-described facility may be straightforwardly adapted or extended in various ways. While the foregoing description makes reference to particular embodiments, the scope of the invention is defined solely by the claims that follow and the elements explicitly recited therein.

## Claims

1. A method in a computing system for automatically prescribing an allocation of resources to a total marketing budget for a distinguished offering, with the goal of optimizing a distinguished business outcome for the offering that is expected to be driven, at least in part, by the allocation of resources to the total marketing budget, comprising:

   receiving qualitative attributes of the distinguished offering from a user;
   retrieving an experimentally-obtained average total marketing budget elasticity measure;
   adjusting the experimentally-obtained average total marketing budget elasticity measure based upon at least two of the received qualitative attributes of the distinguished offering; and
   using the adjusted experimentally-obtained average total marketing budget elasticity measure to determine an allocation of resources to a total marketing budget that tends to optimize the distinguished business outcome.

2. The method of claim 1, further comprising persistently storing the determined allocation of resources.

3. The method of claim 1, further comprising displaying the determined allocation of resources to a user.

4. A computer-readable medium whose contents cause a computing system to perform a method for automatically prescribing an allocation of resources to a total marketing budget for a distinguished offering, with the goal of optimizing a distinguished business outcome for the offering that is expected to be driven, at least in part, by the allocation of resources to the total marketing budget, comprising:

   receiving qualitative attributes of the distinguished offering from a user;
   retrieving an experimentally-obtained average total marketing budget elasticity measure;
   adjusting the experimentally-obtained average total marketing budget elasticity measure based upon at least two of the received qualitative attributes of the distinguished offering; and
   using the adjusted experimentally-obtained average total marketing budget elasticity measure to determine an allocation of resources to a total marketing budget that tends to optimize the distinguished business outcome.

**5.** A method in a computing system for automatically prescribing an allocation of resources to each of one or more activities to be performed with respect to a distinguished offering, with the goal of optimizing a business outcome for the offering that is expected to be driven, at least in part, by the activities, comprising:

receiving information from a user characterizing attributes of the distinguished offering;
for each of the activities, determining an elasticity measure derived from experimental results for one or more offerings that, while distinct from the distinguished offerings, are determined to be similar to the distinguished offerings based on the received information characterizing attributes of the distinguished offering, the elasticity measure indicating the predicted effect of the activity on the business outcome; and
using the retrieved elasticity measures to generate an allocation of resources for each of the activities.

**6.** The method of claim 5 wherein the determining comprises:

using the received information characterizing a first portion of the attributes of the distinguished offering to select an elasticity measure corresponding to experimental results for offerings whose first portion of attributes are **characterized in** a similar way; and
adjusting the selected elasticity measure based on using the received information characterizing a second portion of the attributes of the distinguished offering.

**7.** The method of claim 5, further comprising automatically committing resources to at least one of the activities in accordance with the allocation generated for those activities.

**8.** A computer-readable medium whose contents cause a computing system to perform a method for automatically prescribing an allocation of resources to each of one or more activities to be performed with respect to a distinguished offering, with the goal of optimizing a business outcome for the offering that is expected to be driven, at least in part, by the activities, the method comprising:

receiving information from a user characterizing attributes of the distinguished offering;
for each of the activities, determining an elasticity measure derived from experimental results for one or more offerings that, while distinct from the distinguished offerings, are determined to be similar to the distinguished offerings based on the received information characterizing attributes of the distinguished offering, the elasticity measure indicating the predicted effect of the activity on the business outcome; and
using the retrieved elasticity measures to generate an allocation of resources for each of the activities.

**9.** The computer-readable medium of claim 8 wherein the determining comprises:

using the received information characterizing a first portion of the attributes of the distinguished offering to select an elasticity measure corresponding to experimental results for offerings whose first portion of attributes are **characterized in** a similar way; and
adjusting the selected elasticity measure based on using the received information characterizing a second portion of the attributes of the distinguished offering.

**10.** The computer-readable medium of claim 8 further comprising automatically committing resources to at least one of the activities in accordance with the allocation generated for those activities.

**11.** One or more computer memories collectively storing a generalized marketing elasticity data structure, comprising a plurality of entries each for a different business offering profile, each business offering profile describing a group of one or more business offerings that are qualitatively distinguished from groups of business offerings of the other business offering profile, each entry containing an elasticity measure indicating the effect of a marketing activity with respect to the group of business offerings on a business outcome,
such that, for a distinguished business offering described by a distinguished one of the profiles, the elasticity measure indicated by the distinguished entry may be used to automatically specify an allocation of marketing resources to the distinguished business offering.

web server — 100

131 — page view requests

132 — served pages

120 — Internet

110 — web client

web client — 110

web client — 110

**FIG. 1**

computer system 200

CPU 201

memory 202

persistent storage 203

computer-readable media drive 204

network connection 205

*FIG. 2*

**Library of Elasticities** ⌐300

IDEAL MIX IS RATIO OF ELASTICITIES
S.T. RIGHT META_DATA PROFILE

LOGS:

| Metadata Profile | Metrics | Log (Outcome) | Base | Log (Outcome, lag1) | Log (External) | Log (Relative Price) | Log (Relative Distribution) | TV | Print | Radio | Outdoor | Internet Search | Internet Query | Hispanic | Direct | Events | Sponsor | Other |
|---|---|---|---|---|---|---|---|---|---|---|---|---|---|---|---|---|---|---|
| **Study XXZ_101** | | | | | | | | | | | | | | | | | | |
| Study Characteristics | | | | | | | | | | | | | | | | | | |
| New product | No | | | | | | | | | | | | | | | | | |
| Cognition score | Medium | | | | | | | | | | | | | | | | | |
| Affect score | High | | | | | | | | | | | | | | | | | |
| Experience score | Average | | | | | | | | | | | | | | | | | |
| Message clarity | Grid from budget | | | | | | | | | | | | | | | | | |
| Message persuasiveness | Grid from budget | 1 | 0.5 | 0.2 | 0.4 | 0.15 | 0.4 | 0.12 | 0.03 | 0.025 | 0.015 | 0.035 | 0.04 | 0.02 | 0.04 | 0.02 | 0.01 | 0.01 |
| **Study XXZ_102** | | | | | | | | | | | | | | | | | | |
| Study Characteristics | | | | | | | | | | | | | | | | | | |
| New product | Yes | | | | | | | | | | | | | | | | | |
| Cognition score | Low | | | | | | | | | | | | | | | | | |
| Affect score | High | | | | | | | | | | | | | | | | | |
| Experience score | Average | | | | | | | | | | | | | | | | | |
| Message clarity | Grid from budget | | | | | | | | | | | | | | | | | |
| Message persuasiveness | Grid from budget | 1 | 0.5 | 0.2 | 0.4 | 0.15 | 0.4 | 0.12 | 0.03 | 0.025 | 0.015 | 0.035 | 0.04 | 0.02 | 0.04 | 0.02 | 0.01 | 0.01 |
| **Study XXZ_1-3** | | | | | | | | | | | | | | | | | | |
| Study Characteristics | | | | | | | | | | | | | | | | | | |
| New product | No | | | | | | | | | | | | | | | | | |
| Cognition score | Medium | | | | | | | | | | | | | | | | | |
| Affect score | High | | | | | | | | | | | | | | | | | |
| Experience score | Average | | | | | | | | | | | | | | | | | |
| Message clarity | Grid from budget | | | | | | | | | | | | | | | | | |
| Message persuasiveness | Grid from budget | 1 | 0.5 | 0.2 | 0.4 | 0.15 | 0.4 | 0.12 | 0.03 | 0.025 | 0.015 | 0.035 | 0.04 | 0.02 | 0.04 | 0.02 | 0.01 | 0.01 |

310, 320, 330 — 311, 312, 313, 314, 315, 316 — 351, 352, 353, 354, 355, 356, 361, 362, 363, 364, 365, 366, 367, 368, 369, 370, 371

*FIG. 3*

EP 3 361 438 A1

US English ▼

MSP   Compass

||Home|| Features | Case Study |

## Optimize market spend – Increase ROI.
MSP Compass shows you how to get the best return on your marketing investment.
Best of all - it's Free!

It's easy – and free!

Don't have a MSP account?
Sign Up Now.
421

Sign in to MSP Compass with your
## MSP | Account

Email: |dave@msp.com| ——401

Password: |***********| ——402

☑ Remember me on this computer.

( Sign in ) ——403

I cannot access my account.
411

## FIG. 4

MSP   Compass

US English ▼

Current Scenarios                                    Welcome, dave@anycompany.com  | Sign Out |

550 {

| Create | View/Edit | Compare | Send | Delete |
|--------|-----------|---------|------|--------|
| ⌐551 | ⌐552 | ⌐553 | ⌐554 | ⌐555 |

| | Name ⌐511 | Description ⌐512 | Created ⌐513 | Status ⌐514 |
|--|------|-------------|---------|--------|
| 501 { | Scenario name | Description text area for scenario information | 11/22/2006 – 9:15 am PST | ACTIVE |
| 502 { | Scenario name | Description text area for scenario information | 11/22/2006 – 9:15 am PST | ACTIVE |
| 503 { | Scenario name | Description text area for scenario information | 11/22/2006 – 9:15 am PST | ACTIVE |
| 504 { | Scenario name | Description text area for scenario information | 11/22/2006 – 9:15 am PST | ACTIVE |
| 505 { | Scenario name | Description text area for scenario information | 11/22/2006 – 9:15 am PST | IN-PROGRESS |
| 506 { | Scenario name | Description text area for scenario information | 11/22/2006 – 9:15 am PST | IN-PROGRESS |

- - - - - - - - - - - - - - - - - - - - - - - - - - - - - - - - - - - - - - - - - - - - - - - - - - - - - - - - - - - - - - - - - - - - - - - - -

©2007 MSP – Compass Home – Terms of Service – Privacy Policy – Contact Us

*FIG. 5*

MSP    Compass

US English ▼

Edit Profile                                      Welcome, dave@anycompany.com | Sign Out

Compass: Scenario XYZ | Description

Step 1 > Step 2 > Step 3 > Step 4 >

Current Revenue ($)                    ─601        Gross Profit (% of Revenue)           ─604

$250,000,000                                       40%
                                                   ◄ | III |          ►

Current annual marketing spending ($)  ─602        Market Share (% Dollars)             ─605

$49,000,000                                        10%
                                                   ◄ | III |          ►

What is your anticipated growth rate
for 1 year ahead for your industry?    ─603

10%
◄ | III |          ►

─698          ─699

| Save |  | Continue > |

- - - - - - - - - - - - - - - - - - - - - - - - - - - - - - - - - - - - - - - - - - - - - -

*FIG. 6*

MSP   Compass

US English ▼

Edit Profile                                        Welcome, dave@anycompany.com | Sign Out

Compass: Scenario XYZ | Description

Step 1 > Step 2 > Step 3 > Step 4 >

Which describes
your industry?
☑ very new
☐ fairly new         701
☐ fairly established
☐ very mature

Which describes
your market?
☐ very new
☐ fairly new         702
☑ fairly established
☐ very mature

Which describes
your channel?
☐ very new
☑ fairly new         703
☐ fairly established
☐ very mature

What is the innovation
level of your marketing?
☐ very new
☐ fairly new         704
☐ fairly established
☑ very mature

[ Save ]  [ Continue > ]

© 2007 MSP – Compass Home – Terms of Service – Privacy Policy – Contact Us

**FIG. 7**

EP 3 361 438 A1

MSP  Compass

US English ▼

| Home | Profile | Scenarios | Tutorial | Case Study |

Edit Profile                                Welcome, dave@anycompany.com | Sign Out

Compass: Scenario XYZ | Description

Step 1 > Step 2 > Step 3 > Step 4 >

What is the information content of
your marketing focus this year?

☐ A lot of new content
☑ A mix of old and new content        } 801
☐ Established content to sustain

How would you characterize
your company?

☐ Industry leader
☑ Top contender                       } 802
☐ New entrant to the field
☐ Specialty or niche position

How would you characterize
your market share?

☐ Low and declining
☑ Low and increasing                  } 803
☐ High and declining
☐ High and increasing

How would you characterize
your pricing strategy?

☐ Deep discount or price-focused position  } 804
☑ Premium or high-end position

[ Save ]   [ Continue > ]

© 2007 MSP – Compass Home – Terms of Service – Privacy Policy – Contact Us

*FIG. 8*

MSP Compass

| Home | Profile | Scenarios | Tutorial | Case Study |

US English ▼

Edit Profile

Welcome, dave@anycompany.com | Sign Out

Compass: Scenario XYZ | Description

Step 1 > Step 2 > Step 3 > Step 4 >

Would you like to include customer segment detail? } 901

☐ Yes  ☑ No

Please click an area on the chart to plot your assessment
of your branding, messaging, and positioning

Clarity 911 {
Excellent
Good
Fair
Poor
} 910

913 —
Below Normal | Typical | Better than Normal | Break Thru

912
Consistency

Please click an area on the chart to plot your assessment
of your advertising

Likeability 921 {
Excellent
Good
Fair
Poor
} 920

923 —
Below Normal | Typical | Better than Normal | Break Thru

922
Persuasiveness

Save | Continue >

©2007 MSP – Compass Home – Terms of Service – Privacy Policy – Contact Us

## FIG. 9

EP 3 361 438 A1

## MSP Compass

US English ▼

Compass: Scenario XYZ | Description area for information

Welcome, dave@anycompany.com | Sign Out

| Home | Market Share | Spending Mix | P&L |

**Market Share:** ──1001

55% 3% 15% 15% 12%

Click the chart above to view more detail

**Spending Mix:** ──1002

| TV-Nat'l | 30% |
| TV-Cable | 20% |
| TV-Nat'l | 33% |
| TV-Cable | 19% |
| TV-Nat'l | 37% |
| TV-Cable | 19.5% |
| TV-Nat'l | 37.5% |
| TV-Cable | 19.5% |

Click the chart above to view more detail

**P&L:** ──1003

Click the chart above to view more detail

© 2007 MSP – Compass Home – Terms of Service – Privacy Policy – Contact Us

## FIG. 10

MSP Compass

US English ▼

| Home | Profile | Scenarios | Tutorial | Case Study |

Compass: Scenario XYZ |
Description area for information

Welcome, dave@anycompany.com | Sign Out

| Home | Market Share | Spending Mix | **P&L** |

Save | Optimize >

| | 1151 | Current ($) — 1161 | Ideal ($) — 1162 | Change (%) — 1163 | |
|---|---|---|---|---|---|
| 1151 | Revenue | $3,900 | $4,573 | 117.3 | 1150 |
| 1152 | Cost of Goods/Services | $3,003 | $3,521 | 117.3 | |
| 1153 | Gross margin | $897 | $1,062 | 117.3 | |
| 1154 | Marketing Spend | $85 | $100 | 118.1 | |
| 1155 | Marketing Contribution After Cost | $812 | $951 | 117.3 | |

| P&L | Current | Ideal | Change |
|---|---|---|---|
| A Revenue | $3,900 | $4,573 | 117.3 |
| Cost of Goods/Services | $3,003 | $3,521 | 117.3 |
| Gross margin | $897 | $1,062 | 117.3 |
| Marketing Spend | $85 | $100 | 118.1 |
| B Marketing Contribution After Cost | $812 | $951 | 117.3 |

1198 Save   1199 Optimize >

©2007 MSP – Compass Home – Terms of Service – Privacy Policy – Contact Us

## FIG. 11

MSP   Compass

| Home | Profile | Scenarios | Tutorial | Case Study |

US English ▼

Compass: Scenario XYZ |
Description area for Information

Welcome, dave@anycompany.com | Sign Out

| Home | Market Share | Spending Mix | P&L |

[ Save ]  [ Optimize > ]

Budget:
(Accept or enter new amount)
$55,000,000
Default Budget
$49,000,000

Special Issue Setting:
(Please select either Yes or No for the following questions
Y  N
☐ ☑ Include both Brand and Product Media spending?
☑ ☐ Is this the launch of a New Product?

1208 —

| | 1204 Current | 1205 Ideal | 1206 Brand ($) | 1207 Product ($) | Total $ Amount Difference: Current vs. Ideal |
|---|---|---|---|---|---|
| 1211 TV - National Network | 30% | 37% | $12,210 | $8,140 | (5,650) |
| 1212 TV - Cable | 20% | 19.5% | $6,435 | $4,290 | (925) |
| 1213 Radio | 5% | 5% | $1,650 | $1,100 | (300) |
| 1214 Print | 15.0% | 10% | $3,300 | $2,200 | 1,850 |
| 1215 Outdoor | 2% | 2% | $660 | $440 | 120 |
| 1216 Internet Search | 2.5% | 6% | $1,980 | $1,320 | (2,075) |
| 1217 Internet Banner | 2.5% | 2% | $660 | $440 | 120 |
| 1218 Local Events/Sponsorship | 5% | 2.5% | $825 | $550 | 1,075 |
| 1219 Global Events/Sponsorship | 5% | 3% | $990 | $660 | 800 |
| 1220 Other Digital Media | 2% | 2% | $660 | $440 | (120) |
| 1221 Direct/1:1 | 5% | 6% | $1,980 | $1,320 | (850) |
| 1222 PR/Buzz | 6% | 5% | $1,650 | $1,100 | 190 |
| | 100% | | $33,000 | $22,000 | $6,000 |

1210

Customize Report: (Please select the brands you would like to compare)

1230
1231 ☑ TV
1232 ☑ Radio
1233 ☑ Print
1234 ☐ Outdoor
1235 ☐ Internet Search
1236 ☐ Internet Banner
1237 ☐ Local Events Sponsorship
1238 ☐ Global Events Sponsorship
1239 ☐ Other Digital Media
1240 ☐ Direct 1:1
1241 ☐ PR/ Buzz

1250
TV-National & Cable
Current          1252          Brand: $8,820 – Product $5,880  — 1254
TV-Nat'l [ 30% ]                Ideal
TV-Cable [ 20% ] —1253  } 1251   TV-Nat'l [ 37% ] 1257
                                 TV-Cable [ 19.5% ] —1258  } 1256

1260
Radio
Current [ 5% ] —1262
Ideal [ 5% ] —1263

1270
Print
Current [ 15% ] —1272
Ideal [ 10% ] —1273

—1298   —1299
[ Save ]  [ Optimize > ]

©2007 MSP – Compass Home – Terms of Service – Privacy Policy – Contact Us

**FIG. 12**

COMPASS KEY STEPS (1-6 BELOW)     OUTLINE     COMPASS MEDIA

DETERMINE
CONTEXT

1. Who is the target market for the brand or business?
   1.1 ☐ Adults, 18-49, both Male and Female
   1.2 ☐ Adults, 18-49, primarily Male
   1.3 ☐ Adults, 18-49, primarily Female
   1.4 ☐ Youth, Ages 15-22
   1.5 ☐ Children, Under Age 15
   1.6 ☐ Adults, 50+

2. Please describe the business or product category
   2.1    Consumer Involvement
          ☐ low    ☐ medium    ☐ high
   2.2    What level of information is needed by the customer
          ☐ low    ☐ medium    ☐ high
   2.3    Type of product or service
          ☐ durables              ☐ non-durables
          ☐ consumer product      ☐ industrial product
   2.4    Is the product or service
          ☐ a luxury or premium positioned brand
          ☐ high priced relative to norms
          ☐ superior in quality

3. Please describe the business, product's or service's share of voice
   3.1 ☐ typical/average
   3.2 ☐ above average
   3.3 ☐ below average

4. What is the primary goal of the communications
   4.1 ☐ convey information
   4.2 ☐ develop liking and emotional value
   4.3 ☐ reinforce habits

5. What is the stage of life of the business, product or service
   5.1 ☐ New
   5.2 ☐ Established
   5.3 ☐ Mature
   5.4 ☐ Other

6. What is the Reach objective over 12 months for the communications
          ☐ Percent of Target

7. What is the duration of the customer's usage or buying cycle
   7.1 ☐ Frequently, daily or weekly
   7.2 ☐ Seasonal
   7.3 ☐ Once a year/annually
   7.4 ☐ Once every 2-3 years
   7.5 ☐ Once in 10 years/
   7.6 ☐ Special

8. Please describe the customer's prior experience, if any, with
   the business, product or service
          ☐ None             ☐ Positive Word of Mouth
          ☐ Average          ☐ Below Average

9. Is brand "personality" considered a differentiator in the cateogry
          ☐ Yes              ☐ No

10. To what extent is the business, product or service required to
    be supported
          ☐ Nationally       ☐ Locally

1300

**FIG. 13**

SCORE

Determine right
communications
mix (and constraints)
(using rules)

| | | | |
|---|---|---|---|
| Cognition | 3 | High | If 2.25 is high |
| | 2 | Medium | If 2.2 is durables or industrial product, service |
| | 1 | Low | If 2.1 or 2.2 is low and 4.2 or 4.3 is yes |
| Affect | 3 | High | If 4.2 is yes |
| | 2 | Medium | If 9 is yes |
| | 1 | Low | If 9 is no, or 4.2 is no |
| Experience | 3 | High | If any 2.3 are yes |
| | 2 | Medium | If 8 is average or below average |
| | 1 | Low | If 5 is new or 8 is none |

1400

*FIG. 14*

Preliminary
initial mix of resources
(if consumer product)  Percentages  Rec'd Media Mix (starting, pre-adjustments)

| Compass Budget Deal $10,000,000 | Starting Allocations Weights for Freq Calcs | | 1 High High | 2 High Low | 3 Low High | 4 Medium Medium | 5 High Medium | 6 Medium High | 7 Low Low if national | 8 Low Medium | 9 Medium Low |
|---|---|---|---|---|---|---|---|---|---|---|---|
| | | Cognition score / Affect score | | | | | | | | | |
| $5,000,000 | 50 | TV | 44 | 20 | 60 | 50 | 100 | 50 | 65 | 55 | 50 |
| $0 | 10 | Print - magazines | 12 | 25 | 5 | 10 | 100 | 10 | 0 | 5 | 10 |
| $0 | 5 | Print – newspapers | 0 | 5 | 0 | 5 | 100 | 0 | 5 | 0 | 5 |
| $500,000 | 10 | Radio | 5 | 5 | 5 | 10 | 100 | 5 | 10 | 15 | 10 |
| $0 | 0 | Outdoor | 0 | 0 | 5 | 0 | 100 | 0 | 0 | 5 | 0 |
| $0 | 5 | Internet – search | 10 | 20 | 5 | 5 | 100 | 10 | 10 | 5 | 10 |
| $25,000 | 5 | Internet – ad words | 5 | 10 | 5 | 5 | 100 | 5 | 10 | 5 | 10 |
| $0 | 5 | Direct marketing | 12 | 15 | 0 | 5 | 100 | 5 | 0 | 0 | 5 |
| $0 | 5 | Sponsorships/events | 7 | 0 | 5 | 5 | 100 | 10 | 0 | 5 | 0 |
| $1,250 | 5 | PR/other | 5 | 0 | 10 | 5 | 100 | 5 | 0 | 5 | 0 |
| $0 | 0 | Street | 0 | 0 | 5 | 5 | 100 | 0 | 0 | 0 | 0 |
| | | Sub-total | 100 | 100 | 100 | 100 | 100 | 100 | 100 | 100 | 100 |

1500

*FIG. 15*

Special adjustments

Adjust if highly local support

    Reduce TV 10
    Add 5 to newspapers
    Add 5 to sponsorships/events

Adjust if a new product

    Add TV 5
    Reduce/scale rest of lines -5

## FIG. 16

1600

Determine reach and frequency factors for min persuasion and minimum impressions by type

| | Purchased Reach | Type | Effective % of target (reach) | FREQ WTS cf to C1112 | Frequency per Cust. Minimum No. Exposures/ Impressions per Purchase Cycle | No. Purchase cycles per year | Total Annual calc total no. impressions | CPI Ballpark 2007 Cost per impression $$ per | Total Est. Min Spending by Type |
|---|---|---|---|---|---|---|---|---|---|
| TARGET REACH SIZE OF TARGET AUDIENCE 5000000 | 6,260,000 | TV | 80 | 0.516 | 1.6 | 26 | 260,000,000 | 0.03 | $7,800,000 |
| | | Print - magazines | | 0.032 | 0.1 | 26 | 16,250,000 | 0.01 | $162,500 |
| | | Print – newspapers | | 0.032 | 0.1 | 26 | 16,250,000 | 0.005 | $81,250 |
| | | Radio | | 0.032 | 0.1 | 26 | 16,250,000 | 0.0025 | $40,625 |
| | | Outdoor | | 0.032 | 0.1 | 26 | 16,250,000 | 0.01 | $162,500 |
| | | Internet – search | | 0.065 | 0.2 | 26 | 32,500,000 | 0.01 | $325,000 |
| | | Internet – ad words | | 0.161 | 0.5 | 26 | 81,250,000 | 0.01 | $812,500 |
| | | Direct marketing | | 0.032 | 0.1 | 26 | 16,250,000 | 0.03 | $487,500 |
| | | Sponsorships/events | | 0.032 | 0.1 | 26 | 16,250,000 | 0.001 | $16,250 |
| | | PR/other | | 0.032 | 0.1 | 26 | 16,250,000 | 0.005 | $81,250 |
| | | Street | | 0.032 | 0.1 | 26 | 16,250,000 | 0.01 | $162,500 |
| | | | | | 3.1 WTD sum | | 503,750,000 | Sub-total | $10,131,875 |

*FIG. 17*

1700

Scale size of media results to match
total budget dollars

IE scale size of target audience
Up or down

Scale size of media results to match
Total budget dollars

Scale
up or
down
target
audience
to match
total
marketing
budget

**FIG. 18**

1800

FIG. 19

Europäisches
Patentamt

European
Patent Office

Office européen
des brevets

# EUROPEAN SEARCH REPORT

Application Number

EP 18 15 9611

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/093296 A1 (PHELAN WILLIAM L [US] ET AL) 13 May 2004 (2004-05-13) * paragraph [0051] - paragraph [0058]; figure 1 * | 1-11 | INV. G06Q30/00 G06F9/46 |
| X | US 2004/210543 A1 (OUIMET KENNETH J [US]) 21 October 2004 (2004-10-21) * paragraph [0075] - paragraph [0079]; figures 3,4,5 * | 1-11 | |
| X | WO 2005/059685 A2 (DELTA AIR LINES INC [US]; RAVULAPATI KIRAN KUMAR [US]; FRANK KATIA CRI) 30 June 2005 (2005-06-30) * abstract; figure 1 * * page 6 - page 10 * | 1-11 | |

TECHNICAL FIELDS
SEARCHED (IPC)

G06Q

The present search report has been drawn up for all claims

| Place of search | Date of completion of the search | Examiner |
|---|---|---|
| Munich | 19 April 2018 | Anastasov, Yuliyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 9611

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2018

| Patent document cited in search report | Publication date | Patent family member(s) | | Publication date |
|---|---|---|---|---|
| US 2004093296 A1 | 13-05-2004 | AU | 2003237135 A1 | 17-11-2003 |
| | | EP | 1500020 A2 | 26-01-2005 |
| | | US | 2004093296 A1 | 13-05-2004 |
| | | WO | 03093930 A2 | 13-11-2003 |
| US 2004210543 A1 | 21-10-2004 | US | 2002107819 A1 | 08-08-2002 |
| | | US | 2004024715 A1 | 05-02-2004 |
| | | US | 2004210543 A1 | 21-10-2004 |
| WO 2005059685 A2 | 30-06-2005 | US | 2005149381 A1 | 07-07-2005 |
| | | WO | 2005059685 A2 | 30-06-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 89572907 P